# EUROPÄISCHE PATENTANMELDUNG

(11) **EP 1 674 313 A2**
(43) Veröffentlichungstag der Anmeldung: **28.06.2006**
(21) Anmeldenummer: 05027069.3
(22) Anmeldetag: 12.12.2005
(51) Int. Cl.: B60J 5/04

(54) **Aufprallschutz für die Fahrgastkabine eines Kraftfahrzeuges**

(30) Priorität: 21.12.2004 AT 21312004
(71) Anmelder: Vingron, Peter, Dr.techn., 2371 Hinterbrühl (AT)
(72) Erfinder: Vingron, Peter, Dr.techn., 2371 Hinterbrühl (AT)

(57) **Zusammenfassung**

Der Seitenaufprallschutz eines Kraftfahrzeuges wird dadurch erfindungsgemäß erhöht, dass die Energie bei einem Seitenaufprall durch eine in einer Seitentür eingebaute Baugruppe sich aufeinander abstützender Träger nicht nur auf die A-; B- oder C-Säulen der Karosserie, sondern ebenso auf die Bodengruppe übertragen wird. Die erfindungsgemäße Baugruppe besteht aus mindestens drei Trägern (in der Abbildung aus den 4 Trägern (5) bis (8)), die sich im zentralen Bereich der Baugruppe gegenseitig so abstützen, dass jeder Träger sich auf genau einen anderen zwischen dessen Abstützpunkten abstützt, aber jeder Träger einen und nur einen Träger stützt. Der zentrale Bereich der Baugruppe, wo sich die Träger gegenseitig abstützen, wird von einer Platte (9) abgedeckt. Jene Trägerenden, die sich nicht im zentralen Bereich gegenseitig abstützen, sind so am Rahmen oder im Rahmen der Tür befestigt, dass diese Befestigungsstellen, bzw. der Rahmen, im Falle eines Seitenaufpralls gegen tragende Elemente der Karosserie und der Bodengruppe abstützen.

## Beschreibung

Die Erfindung betrifft einen Aufprallschutz für die Fahrgastkabine eines Kraftfahrzeuges; der in einer Tür oder Klappe oder Wand des Kraftfahrzeuges eingebaut ist, bestehend aus einem mindestens durch drei Träger gebildeten Stabwerk- Der Seitenaufprallschutz wird erfindungsgemäß dadurch erzielt, dass jeder Träger sich mit genau einem seiner beiden Abstützpunk te auf einen der anderen Träger zwischen dessen beiden Abstützpunkten abstützt. Der Aufprallschutz kann in eine, mehrere oder alle Wände der Fahrgastkabine eingebaut werden. Die Baugruppe wird in einer Seitentür bzw. Seitenwand eingebaut, um gegen einen Seitenaufprall zu schützen, in einer Hecktür oder Heckklappe, um gegen einen Heckaufprall (der nicht vom Stoßfänger aufgefangen wird) zu schützen, im Bereich der Vorderwand der Fahrerkabine eines Kleintransporters oder zwischen Motorraum und Fahrgastraum (bei einem Personenkraftwagen mit Frontmotor), um bei einem Frontalaufprall zu schützen bzw. ein Eindringen des Motors in den Fahrgastraum zu verhindern.

In der Literatur sind verschiedene Baugruppen zur Strukturverstärkung von Seitentüren von Kraftfahrzeugen beschrieben. Sie bestehen üblicherweise aus einem oder mehreren länglichen, etwa horizontal liegenden Profilträgern mit unterschiedlichsten Profilormen, die sich am Rahmen der Seitentür und teilweise gegenseitig abstützen (als Beispiele seien US005755484A, US20030168902A1 und DE4342038:41 angeführt). Bei diesen Konstruktionen werden Seitenaufprallkräfte direkt nur auf die Karosseäesteber (die A-, B- und C-Säulen) und über diese indirekt auf die Bodengruppe übertragen, nicht aber (oder nur in untergeordnetem Maße) direkt auch auf die Bodenplatte. Auch weist keines der angeführten Patente eine Trägeranordnung auf, die dem Patentanspruch 1 entspricht, da es in jedem der vorgeschlagenen Trägeranordnungen jeweils mindestens einen Träger gibt, der sich nicht auf einen anderen Träger der Anordnung abstützt.

Ein weiterer Nachteil der vorgeschlagenen Konstruktionen ist eine "Versteifung der Tür im Falle eines Frontalzusammenstosses. Alle längs liegenden Armierungen, neigen dazu, die Tür zu versteifen, so dass sie sich im Türausschnitt verspreizt und nur schwer zu öffnen ist. Die Türversteifung tritt erst recht bei jenen Strukturverstärkungen auf, die plattenförmig ausgebildet sind (wie etwa in DE 195 40 187 A1 beschrieben). Mehr oder weniger aufwendige Konstruktionen wurden vorgeschlagen zur Vermeidung dieser Versteifung einer Tür im Zuge eines Frontalaufpralls. In EP 94 460 031-1 wird der Vorschlag einer teleskopischen Stange gemacht, während in DE 43 37 082 A1 mit Seilen und speziellen Kupplungen gearbeitet wird.

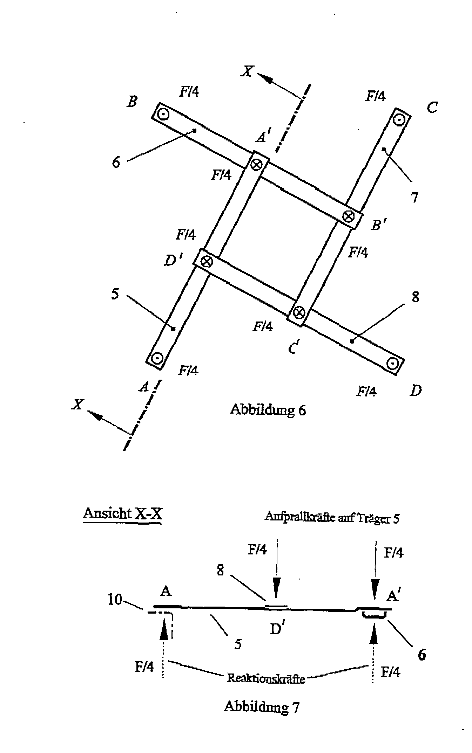

Die Aufgabe der Erfindung ist es, den Aufprallschutz maßgeblich zu erhöhen, was durch die Eigenschaften der erfindungsgemäßen Baugruppe erreicht wird. Die erfindungsgemäße Baugruppe hat insbesondere die Fähig-keit, die Aufprallenergie zu einem wesentlichen Teil auf die tragenden Teile der Bodengruppe eines Kramahweuges zu übertragen und nicht nur-wie bisher üblich―primär auf die tragenden Teile der Karosserie (wie den A-, B- und C-Säulen). Eine Sonderheit der erfindungsgemäßen Baugruppe ist, dass ihre Festigkeit in hohem Maße von ihrer Geometrie herrührt und dass diese auch noch bei hoher Belastung erhalten bleibt. Beim Einbau der erfindungsgemäßen Baugruppe in eine Seitentür bietet die Baugruppe einen über durchschnittlich hohen Seitenaufprallschutz―was anhand der Abbildungen 6 und 7 noch näher erläutert wird―und dies, obwohl sie im Falle eines Frontalaufpralls nicht oder nur in einem geringen Maße zu einer Verspreizung der Tür im Türausschnitt führt.

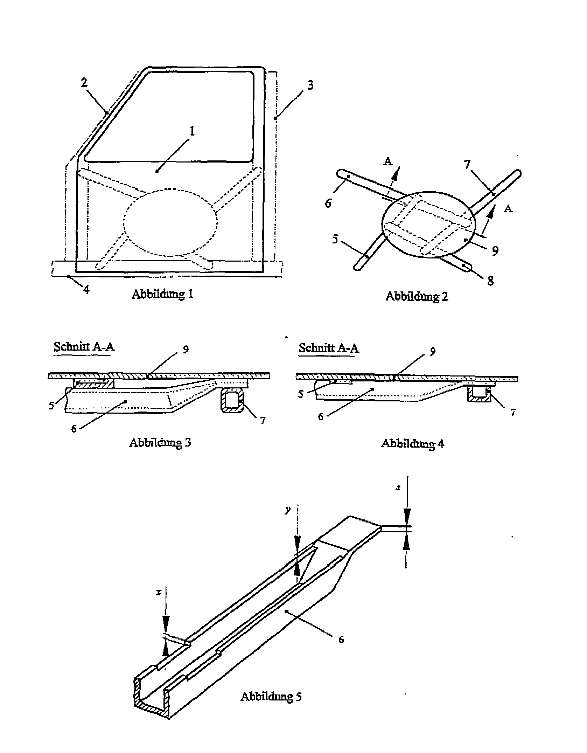

Beispiele der erfindungsgemäßen Konstruktion sind in den Abbildungen dargestellt. Abbildung 1 zeigt den Einbau der erfindungsgemäßen Baugruppe als Aufprallschutz in einer linken vorderen Seitentür eines Kraftfahrzeuges: Abbildung 2 zeigt die Baugruppe selber. Abbildung 3 zeigt einen Schnitt durch eine erfindungsgemäße Baugruppe unter Verwendung von Hohlträgern. Abbildung 4 zeigt einen Schnitt durch eine erfindungsgemäße Baugruppe unter Verwendung von U-Trägern. Abbildung 5 zeigt einen U-Träger wie er in Abbildung 4 verwendet wird. Abbildung 6 zeigt eine Aufsicht auf die gegenseitige Abstützung der Träger. Abbildung 7 zeigt die Belastung eines Einzelträgers bei einem Aufprallereignis. Die Bauteile-Nummern und Sonderzeichen der Abbildungen sind in Tabelle 1 erklärt.

Das Funktionsprinzip der erfindungsgemäßen Baugruppe soll an Hand des in den Abbildungen 1 und 2 gezeigten Beispiels ausgeführt werden. In Abbildung 1 ist der Einbau der Baugruppe in der linken vorderen Seitentür (1) eines Krafbfahixeuges gezeigt. Die Baugruppe, durch das Blech der Tür verdeckt, ist in Abbildung 1 gestrichelt gezeichnet. Die Baugruppe ist in Abbildung 2 herausgezeichnet und besteht in dem gezeigten Beispiel aus 4 aufeinander abgestützten Trägern (wie in der Abbildung gestrichelt angedeutet) und eine, die Abstützungsstellen abdeckende Platte (9). Jene Trägerenden, die sich nicht gegenseitig abstützen, sind im Rahmen der Tür befestigt, oder am Rahmen derart fixiert, dass diese Befestigungsstellen im Falle eines Seitenaufpralls gegen tragende Elemente der Karosserie oder der Bodengruppe gepresst werden und so an diese die Aufprallenergie weiterleiten.

Die Geometrie des Stabwerkes, bzw. die Anordnung der Träger, wird durch die Art der gegenseitigen Abstützung der Träger bestimmt. Ausnahmslos für jeden Träger des Stabwerkes wird seine Geometrie wie folgt erklärt: Jeder Träger wird an seinen beiden Enden abgestützt (es sind dies die sogenannten Stützstellen oder Stützpunkte des Trägers); einer und nur einer der Stützpunkte eines Trägers stützt sich auf einen anderen Träger zwischen dessen Stützpunkten ab (der sich so abstützende Träger bildet oder überträgt bei einem Seitenaufprall die Last auf den ihn stützenden Träger); jeder Träger stützt einen, aber nur einen anderen Träger. Jeder Träger besitzt also zwei Stützstellen und eine Laststelle, letztere ist jene Stelle eines Trägers, wo sich ein anderer Träger des Stabwerkes auf ihn abstützt. Das obige Prinzip kann redundanzfrei iterativ so formuliert werden: Jeder Stabwerks-Träger ist mit genau einem seiner beiden Enden auf einen anderen Stabwerks-Träger zwischen dessen Abstützpunkten abgestützt, und jeder Stabwerks-Träger stützt einen und nur einen anderen.

Der Bereich, wo die Träger sich gegenseitig abstützen, wird im Weiteren als der zentrale Bereich der Baugruppe bezeichnet. Die sogenannten Peripheriepunkte, also jene Trägerenden, die sich nicht auf andere Träger der Baugruppe abstützen, werden immer an tragenden Teilen der Karosserie und/oder der Bodengruppe, bzw. auf Hilfsrahmen oder Türrahmen befestigt, die sich ihrerseits an tragende Teile der Karosserie und/oder der Bodengruppe abstützen.

Die Träger einer Baugruppe können aus verschieden langen und/oder verschieden geformten Hohl- oder Massivprofilen bestehen. Abbildung 3 zeigt als Beispiel entsprechend geformte Hohlträger. Nach einer bevorzugten Ausführungsform der Erfindung sind die Hohlträger jeweils an jenem Ende, das sich auf einen anderen Träger abstützt, flachgedrückt und so gekröpft, dass die Auflageflächen der Platte (9) alle in einer Ebene liegen.

Abbildung 5 zeigt eine bevorzugte Ausführungsform eines aus Blech gepressten U-förmigen Trägers. Bei Verwendung von Trägern dieser Art entsteht eine erfindungsgemäße Baugruppe, wie sie in Abbildung 4 dargestellt ist. Die Auistützfläche ist um das Maß y nach oben gekröpft und die Ausnehmung, in der sich ein anderer Träger abstützt, ist um das Maß x vertieftEs gilt immer x + y = s, wo s die Blechstärke der Trägers ist. Wenn x = 0 ist, besitzt der Träger keine Ausnehmung. Das Kröpfungsmaß y soll immer größer als 0 sein. Auch diese Konstruktion gewährleistet, dass die durch Kröpfung um y erhöhten kleinen Auflageflächen in einer Ebene liegen und so als ebene Auflage für die Platte (9) dienen können.

Nach einer weiteren bevorzugten Ausbildungsform der Erfindung ist jeder Träger auf dem ihn stützenden Träger nur schwach befestigt (etwa durch Punktschweißen, Pressen oder Kleben), um an diesen Stellen eine Sollbruchstelle im Falle eines Aufprallereignisses zu haben. Im Falle eines Seitenaufpralls kann―durch das Auftreten einer Zugkraft in den Trägern nach dem Aufbrechen einer solchen Sollbruchstelle der dort gestützte Träger auf den ihn stützenden Träger gleiten, wodurch die Belastung der Träger zum einen eine reine Biegebelastung bleibt und zum anderen die Geometrie und somit die Festigkeit der Baugruppe bis in hohe Belastungsbereiche erhalten bleibt. Im Falle eines Frontalaufpralls stellen die genannten Sollbruchstellen sicher, dass die in eine Seitentür eingebaute Baugruppe zusammen geschoben wird und so nicht zu einer zusätzlichen Versteifung der Tür führt. Diese Befestigungen an den Sollbruchstellen dienen weiters dazu, die Baugruppe vorfabrizieren zu können und Klappergeräusche im Fahrbetrieb zu verhindern.

Nach einer weiteren bevorzugten Ausbildungsform der Erfindung ist eine Platte (9) zur Abdeckung des zentralen Bereiches des Stabwekes vorgesehen, wobei die Platte (9) an dem Stabwerk zwischen diesem und der Außenwand der Tür oder Klappe durch Schweißen, Kleben, Nieten oder sonst wie befestigt ist- Der Vorteil der Platte (9) in einer solchen Baugruppe ist die bessere Verteilung einer Aufprallkraft auf alle Träger der Baugruppe und eine höhere Wirksamkeit, wenn die Aufprallkraft nicht senkrecht auf die Tür oder die Platte (9) einwirkt.

Die Geometrie eines 4-Träger-Stabwerkes wird anhand der Abbildung 6 im Einzelnen erläutert. Träger (5) muss sich auf genau einen anderen Träger abstützen-im Beispiel auf Träger (6). Die Abstützstelle ist mit A' bezeichnet. Das zweite Ende, A, des Trägers (5) ist (was in Abbildung 6 nicht dargestellt ist) in geeigneter Weise am Türrahmen (der Kraftfahizeugtür gemäß Abbildung 1) befestigt. In analoger Weise stützt sich Träger (6) im Punkt B' auf Träger (7) ab und Träger (7) im Punkt C' auf Träger (8). Wegen der Bedingung, dass jeder Träger einen und nur einen anderen stützt, muss Träger (8) auf Träger (5) gestützt werden, was im Punkt *D'* erfolgt, da dieser Träger als einziger noch keinen anderen abstützt. Die Peripheriepunkte, im angeführten Beispiel die Punkte *A*, *B, C* und *D,* werden―wie oben ausgeführt―auf Hilfsrahmen oder Türrahmen befestigt, die sich ihrerseits an tragende Teile der Karosserie und/oder Bodengruppe abstützen.

Die Belastung der einzelnen Träger bei einem Seitenaufprall wird in den Abbildungen 6 und 7 dargestellt- Ein bevorzugter Einbau der erfindüngsgemäßen Baugruppe erfolgt so, dass die Peripheriepunkte fest in einem Türrahmen befestigt sind. Eine Seitenaufpraukraft *F*―die in Abbildung 6 senkrecht in die Zeichenebene wirkt―bewirkt ein Nachgeben des zentralen Bereiches der Baugruppe, was dadurch ermöglicht wird, dass jeder Träger auf den ihn unterstützenden um ein geringes Maß gleitet- Um dies zu ermöglichen, werden die oben angeführten, schwach ausgebildeten Sollbruchstellen im zentralen Bereich benötigt. Der Einfachheit halber ist in Abbildung 6 angenommen, dass die Aufprallkraft F gleichmäßig auf die Trägerabstützstellen (den Laststellen) verteilt wird, so dass an jeder dieser Stellen *A'*, *B', C'* und *D'* ein Viertel der Seitenaufprallkraft, also *F*/*4* als Last auf den jeweils stützenden Träger wirkt. Betrachtet man beispielsweise Träger (5) (siehe Abbildung 7), so erkennt man, dass im Stützpunkt A' der Anteil *F*/*4* der Aufprallkraft durch die Reaktionskraft von Träger (6) kompensiert wird, und somit nicht belastend auf Träger (5) wirkt- Als Belastung für den Träger (5) wirkt einzig der im Lastpunkt *D'* angreifende Anteil *F*/*4* der Aufprallkraft. Jeder Träger wird also mit der Kraft *F*/*4* (nicht notwendiger Weise mittig) auf Biegung belastet. Dies ist pro Träger die Hälfte der Belastung einer 2-Träger Verstärkung, bei der die Träger etwa horizontal in der Tür eingebaut sind und die außerdem die Seitenaufprallkraft, zur Gänze an die Steher (und nicht an die Bodengruppe) weitergeben. Besteht die erfindungsgemäße Baugruppe aus *N* Trägern, wobei *N* > 3 sein muss, so wird jeder Träger nur mit *F*/*N* belastet. Dies ermöglicht eine leichtere Ausbildung (eine schwächere Dimensionierung) der Träger als bei herkömmlichen Konstruktionen- Bei einem 3-Träger-Stabwerk (wo sich zwei Träger auf Steher und ein Träger auf die Bodenplatte abstützt) wird ein Drittel der Aufprallkraft direkt auf die Bodenplatte geleitet. Bei einem 4-Träger-Stabwerk (wo sich zwei Träger auf Steher und zwei auf die Bodenplatte abstützen wie in Abbildung 1 angedeutet) wird schon die Hälfte der Aufprallkraft direkt auf die Bodenplatte geleitet. Darüberbinaus verteilt das erfindungsgemäße Stabwerk die von einem Seitenaufprall herrührende Belastung selbsttätig auf alle Träger.

**Tabelle 1: Bauteile-Nummern und Sonderzeichen der Abbildungen**

| | |
|---|---|
| 1 | linke vordere Tür |
| 2 | A-Säule |
| 3 | B-Säule |
| 4 | Bodengruppe |
| 5 | Träger |
| 6 | Träger |
| 7 | Träger |
| 8 | Träger |
| 9 | Platte |
| 10 | Rahmen |
| ⊗ | Kraft senkrecht in die Zeichenebene (Aufprallkraft) |
| ⊙ | Kraft senkrecht aus der Zeichenebene (Reaktionskraft) |

## Patentansprüche

1. Aufprallschutz für die Fahrgastkabine eines Kraftfahrzeuges, der in eine Tür oder Klappe oder Wand des Kraftfahrzeuges eingebaut ist; bestehend aus einem mindestens durch 3 Träger gebildeten Stabwerkes, das **dadurch gekennzeichnet ist, dass** jeder Stabwerks-Träger sich mit genau einem seiner beiden Enden auf einen anderen Stabwerks-Träger zwischen dessen Abstützpunkten abstützt und jeder Stabwerks-Träger einen und nur einen anderen stützt.

2. Aufprallschutz gemäß Anspruch 1. **dadurch gekennzeichnet, dass** die Träger des Stabwerkes verschieden lang sind.

3. Aufprallschutz gemäß Anspruch. 1 oder 2, **dadurch gekennzeichnet, dass** die Träger unterschiedlich ausgebildete Querschnitte aufweisen und insbesondere als Hohl- oder U-Träger ausgebildet sind.

4. Aufprallschutz gemäß der Ansprüche 1 bis 3, **dadurch gekennzeichnet, dass** die Trägerenden verschieden ausgebildet sind.

5. Aufprallschutz gemäß einem der Ansprüche 1 bis 4, **dadurch gekennzeichnet, dass** jeder Träger an der Stelle, an der er sich auf einen anderen abstützt, von diesem leicht weggekröpft ist.

6. Aufprallschutz gemäß einem der Ansprüche 1 bis 5, **dadurch gekennzeichnet, dass** jeder Träger für die Abstützung des auf ihm ruhenden anderen Trägers eine Ausbuchtung bzw. Ausnehmung aufweist und dass die Tiefe der Ausnehmung so bemessen ist, dass der sich dort aufstützende Träger in einem geringen Maß über den Rand der Ausnehmung herausragt.

7. Aufprallschutz gemäß der Ansprüche 1 bis 6, **dadurch gekennzeichnet, dass** jeder Träger in der Ausnehmung oder Ausbuchtung des ihn stützenden Trägers eingepresst, angeschweißt, angenietet, eingekittet oder eingeklebt ist.

8. Aufprallschutz nach einem der vorgenannten Ansprüche, **dadurch gekennzeichnet, dass** eine Platte als Abdeckung des zentralen Bereiches des Stabwerkes an der, der Fahrzeugaußenseite des Stabwerkes zugewandten Seite, an diesem befestigt ist.
